# EUROPEAN PATENT APPLICATION

(11) **EP 1 598 255 A1**
(43) Date of publication of application: **23.11.2005**
(21) Application number: 05253158.9
(22) Date of filing: 23.05.2005
(51) Int. Cl.: B61L 15/00, H04L 12/28

(54) **Dynamically forming a wireless local area network (WLAN) in a train**

(30) Priority: 21.05.2004 US 573021 P
(71) Applicant: Pointshot Wireless Inc., Ottawa, ON K2E 8A9 (CA)
(72) Inventor: Griffin, Shawn, Ottawa ON K1S 1X9 (CA); Gallagher, Warren, Richmond Ontario K0A 2Z0 (CA)
(74) Representative: Ahmad, Sheikh Shakeel

(57) **Abstract**

A method of automatically forming a wireless local area network (WLAN) within a group of rail cars in a train, where each rail car in the group has an access point/router. The method comprises the steps of discovering nodes (410) associated with each rail car for inclusion in the WLAN by discovering authorized access point/routers; grouping the discovered nodes into an inter-car bridge group (420); connecting all nodes in the inter-car bridge group to form the WLAN; and connecting the WLAN to a wide area network (WAN) (440) to share connectivity to the WAN with each of the nodes in the inter-car bridge group.

## Description

### FIELD OF THE INVENTION

The present invention relates generally to wireless local area networks. More particularly, the present invention relates to the provision of wireless local area networks in vehicles, such as passenger rail cars.

### BACKGROUND OF THE INVENTION

Current systems that offer wireless local area network (WLAN) services in multiple rail cars of a train utilize a wired local area network (LAN) to interconnect the access points deployed on the cars in the train. The current systems require clumsy and unreliable cabling and manual configuration of the network elements whenever the topology is changed. Because of this, such solutions have only been used in the very limited number of train operations where train sets are kept together for long periods of time.

Many rail operators choose the rail cars used to comprise a train set on a daily basis. Among other things, this enables them to remove cars for maintenance or adjust the number of cars depending on the expected number of passengers. For a WLAN to operate across cars in a train set, it would be unreasonable to expect the network topology to be manually reconfigured on a daily basis after a train set is put together. This would increase the amount of time and expense associated with offering such a service aboard passenger trains and would make such a system economically unattractive.

Although a conventional self-forming wireless mesh network would overcome the problems associated with a wired LAN by eliminating the need for manual configuration and wiring, current self-forming wireless mesh networks discover any nearby wireless node, and add the node to the network, and use the newly discovered node as a transport node in order to extend the network's reach. Such existing self-forming wireless mesh networks are unsuitable for use in a moving vehicle, such as a passenger train, as they would continually attempt to incorporate nodes that the vehicle passes along its route, or would attempt to become part of other mesh networks that the vehicle passes along its route. This is clearly undesirable, as it would substantially reduce the bandwidth of the wireless LAN operating aboard the vehicle, as well as the security and reliability of the network.

It is, therefore, desirable to provide a system and method for providing a LAN in a vehicle that that can be dynamically reconfigured, does not require cabling between cars, and does not interact with unrelated networks.

### SUMMARY OF THE INVENTION

It is an object of the present invention to obviate or mitigate at least one disadvantage of the prior art. In particular, it is an object of the present invention to provide a method of automatically discovering and dynamically forming a wireless network topology within a vehicle, such as a train.

In a first aspect of the present invention, there is provided a method of automatically forming a wireless local area network (WLAN) within a group of rail cars in a train, each rail car in the group having an access point/router. The method comprises the steps of discovering nodes associated with each rail car for inclusion in the WLAN by discovering authorized access point/routers; grouping the discovered nodes into an inter-car bridge group; connecting all nodes in the inter-car bridge group to form the WLAN; and connecting the WLAN to a wide area network (WAN) to share connectivity to the WAN with each of the nodes in the inter-car bridge group.

In embodiments of this aspect of the present invention, the step of discovering nodes for inclusion can comprise the steps of detecting a first node associated with a first car; adding the first node to the inter-car bridge group; and repeating the steps of detecting and adding until all authorized nodes are found. In further embodiments, the step of detecting a first node can include detecting a node having a predetermined identifier, such as an extended service set identifier, using a service location protocol. The step of detecting and adding can be repeated until no node is detected within a predetermined time after the detection of a previous node.

In other embodiments, the method further comprises the steps of monitoring the WLAN for a network topology change; and in response to a detection of a change in the network topology, rediscovering nodes associated with each rail car for inclusion in the WLAN to dynamically reconfigure the WLAN. The network topology change can be caused by the addition or removal of a rail car having an authorized access point/router, at least one of the nodes in the inter-car bridge group can be a network access point, that establishes an in-car network for passenger access to the WAN through the network access point. The network access point can be a wireless network access point that provides a wireless in-car network.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is an illustration of a train of multiple rail cars that offers WLAN service according to an embodiment of the present invention;
Figure 2 is an illustration of two rail cars set in the train shown in Figure 1;
Figure 3 is a flowchart illustrating a method of automatically discovering and dynamically forming a wireless network topology according to an embodiment of the present invention;
Figure 4 is a flowchart illustrating an inter-car bridge discovery step of Figure 3; and
Figure 5 is a flowchart illustrating an inter-car bridge regrouping step of Figure 3.

### DETAILED DESCRIPTION

Generally, the embodiments of the present invention provide a method of automatically discovering and dynamically forming a wireless network topology. More particularly, the present invention relates to a method of offering WLAN services within a vehicle, such as a train, by automatically discovering and dynamically forming a wireless network topology.

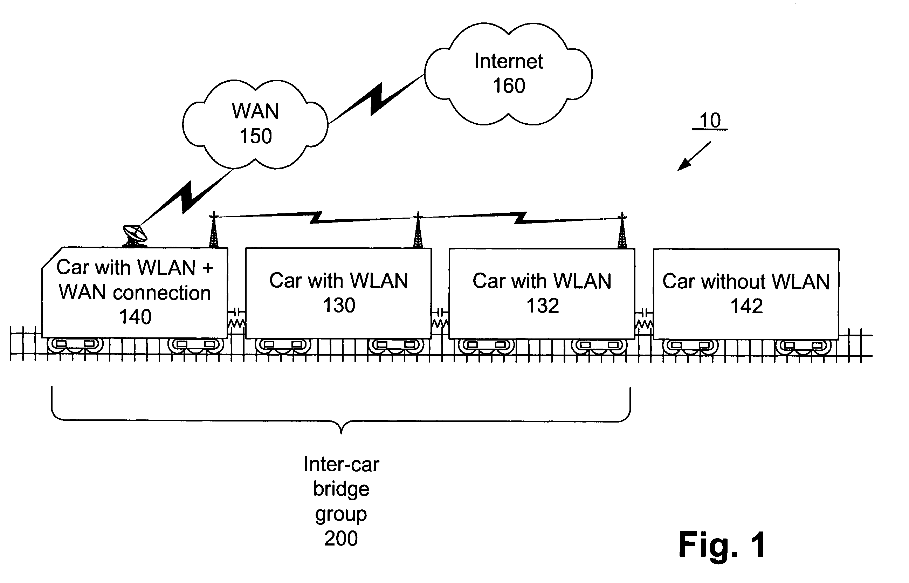

The method and system of automatically discovering and dynamically forming a wireless network topology according to the embodiments of the present invention will now be described with reference to the illustrations and the flow charts of Figures 1 through 7.

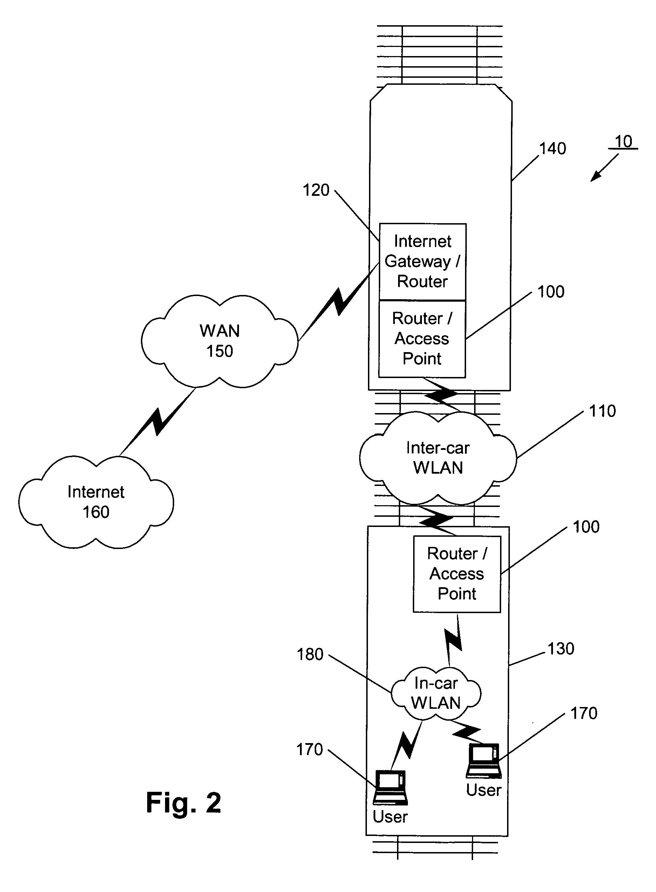

Figures 1 and 2 show an embodiment of the system of the present invention. Figure 1 depicts a train 10 offering WLAN service according to an embodiment of the present invention. Rail train 10 comprises multiple passenger rail cars 130, 132, 140, 142. Referring also to Figure 2, a router/access point 100 is deployed on each of the cars 130, 132, 140 in which it is desired to provide WLAN service. At least one car, such as car 140, includes an Internet gateway/router 120 for connection to the Internet 160 through a WAN 150 composed of communications links such as satellites, RF towers and cellular networks. The WAN access is shared across an inter-car bridge group 200, through an auto-discovered and formed wireless LAN. Not all cars in the train have to offer WLAN service. In the depicted example, car 142 has no wireless service, and therefore does not form part of the inter-car bridge group 200. It should be noted that the placement or ordering of cars not offering wireless service has no effect on the operation of the present invention. Cars offering WLAN can be interspersed throughout the length of the train, separated by intervening cars without WLAN service. All cars having an active router/access point 100 can form part of a given inter-car bridge group.

Figure 2 shows two rail cars, car 140 and car 130. A connection to Internet 160 is made through WAN 150 by Internet Gateway/Router 120. Internet Gateway/Router 120 forms wireless connections with router access point 100 on both of the cars. The connection between Internet Gateway Router 120 and the Router/Access Point 100 in car 140 can be either a wired or wireless connection. The connection to Router/Access Point 100 in car 130 is a wireless connection that can be forged either directly with Internet Gateway/Router 120, with Internet Gateway/Router 120 through the Router/Access Point 100 on car 140, or with Internet Gateway/Router 120 through other intervening Routers/Access Points on unillustrated rail cars. This connection between Internet Gateway/Router 120 and any Router/Access Point 100 forms Inter-car WLAN 110. One skilled in the art will appreciate that these networking elements are commonly referred to as infrastructure nodes, or as nodes operating in an infrastructure mode. In embodiments with additional rail cars, Inter-car WLAN 110 can extend to encompass all cars that are equipped with a router/access point 100, or any subset of those cars. One skilled in the art will appreciate that the Inter-car bridge group 200, shown in Figure 1, is the set of all cars having router/access points 100 that are connected to Inter-car WLAN 110.

In the embodiment, Access Point 100, in either of car 130 or car 140, can serve as a network access point for an in-car WLAN such as in-car WLAN 180. In-car WLAN 180 permits users 170 to access Internet 160 through the Inter-car WLAN connection 110 with Internet Gateway/Router 120. If additional cars are included in Inter-car WLAN 110, it is preferable that users 170 will connect to the in-car WLAN 180 of their respective cars.

In-car WLANs, such as WLAN 180, are formed and managed by the router/access points 100 in each respective car of Inter-car bridge group 200. This is accomplished by using one of any number of conventional network techniques for establishing a publicly accessible access point. Each in-car WLAN is connected through Inter-car WLAN 110 to Internet Gateway/Router 120. The Internet gateway/router 120 in such a system can connect to the Internet 160 through the WAN 150. The in-car WLAN of each of the cars 130 and 132 preferably operates on its own subnet.

The router/access points 100 route Internet destined traffic to the Internet gateway/router 120 across the inter-car WLAN 110. The inter-car WLAN 110 is a dynamically formed WLAN that bridges the router/access points 100 from each equipped car to the Internet gateway/router 120. The Internet Gateway/Router 120 manages connection to Inter 160 through WAN 150, additionally, it routes all Internet destined inter-car traffic. Traffic between users 170 not requiring Internet 160 access are handled by the router/access points 100 that are responsible for each user's in-car WLAN 180.

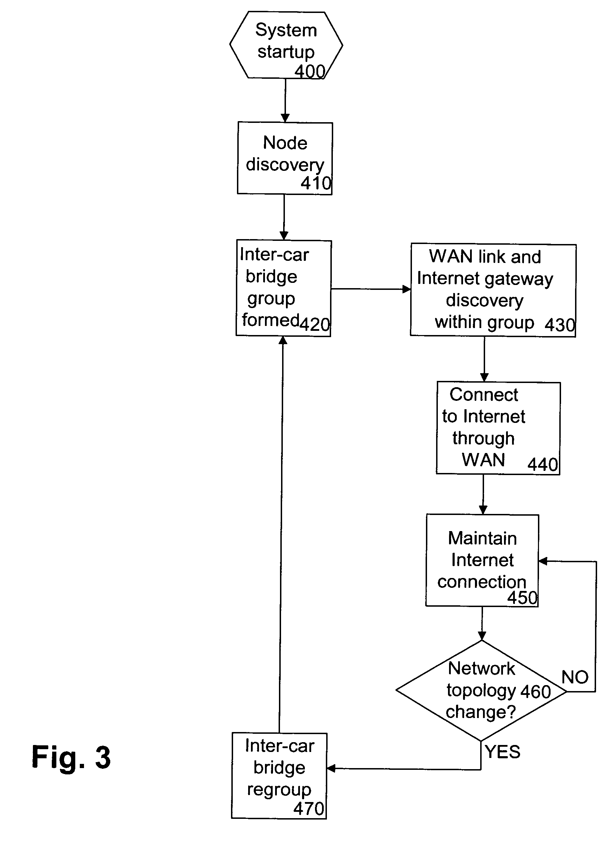

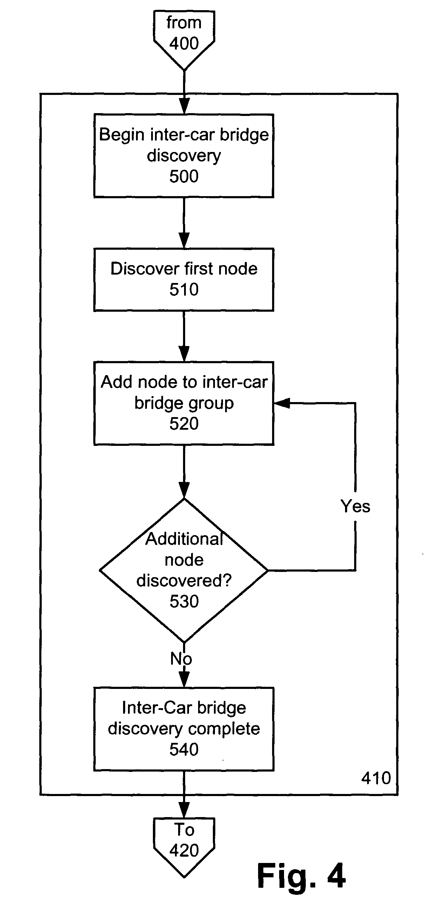

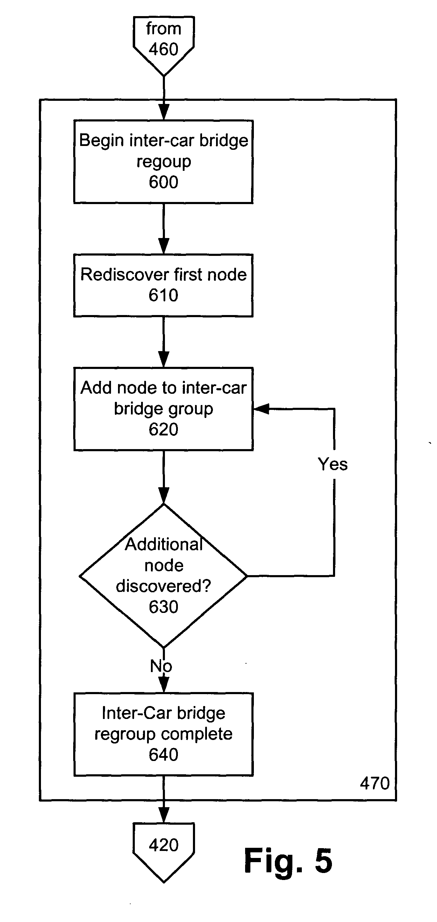

Figure 3 is a flowchart illustrating a method of forming Inter-car WLAN 110. A train is typically comprised of a number of rail cars. These cars are interchangeably mixed in rail yards to form different trains depending on the need for longer or shorter trains, or other needs that may arise. As a result, the configuration of a train can vary day-by-day. To simplify network planning and management, the static network names of nodes cannot be provided to Internet Gateway/Router 120 in advance. As a result, a dynamic method of forming intercar WLAN 110 is required. After the train cars have been selected and connected, the network can be initialized, shown as system startup (400). Active nodes forming the Inter-car bridge group are discovered (410) to form the inter-car bridge group (420). The details of one implementation of step 410 are described in Figure 4 below. One of the internet gateway/routers is established as the connection point to WAN 150, and the connection to WAN 150 is discovered (430). WAN 150 is used to connect to Internet 160 (440). The connection to Interntet 160 is then maintained (450) until a network topology change (460) is detected. After a network topology change is detected, a new Inter-car bridge group discovery process is initiated (470), an exemplary method of this step is illustrated in Figure 5 below. Upon completion, the process returns to (420).

Figure 4 illustrates an embodiment of step 410 in more detail. The inter-car bridge discovery process starts (500). The discovery process identifies a first node for inclusion in the inter-car bridge group (510). The discovered node is added to the inter-car bridge group (520). Additional nodes are searched for, and if discovered (530) they too are added to the inter-car bridge group (520). The identification process preferably uses a common extended service set ID (ESSID) and service location protocol (SLP) to select nodes for inclusion in the inter-car bridge group. The SLP is a protocol established by the Internet Engineering Task Force (NetCTL) that simplifies the discovery of network resources. When no further nodes are available for discovery, the discovery process terminates (540) and the method continues to (420).

Figure 5 illustrates an exemplary method for implementing (470). This step is performed after a change in the topology of the network has been detected. Examples of incidence that may result in a network topology change include the activation of an access point/router on a rail car previously not included in the inter-car bridge group, the loss of a connection to an access point/router on a rail car previously included in the inter-car bridge group, the addition of another entire inter-car bridge group or the removal of a subset of the inter-car bridge group to form another separate inter-car bridge group. For the last two examples, this is common when two trains share a common route segment, and are connected to form a single train over the common section of their routes and are severed before and/or after their common route section. To determine that a topology change has occurred, a number of known techniques can be employed. For example, if a node attempts to connect to the Internet Gateway/Router and cannot, it can broadcast a discovery message, and all nodes receiving the message will then respond and participate in the network regrouping. If one of the access point/routers, or the gateway, do not receive acknowledgement from one of the nodes in an already formed network, they can assume that the node is unavailable and initiate a regrouping process to update the network map. When an unattached node is initialized, it can automatically issue a discovery broadcast message to all nodes sharing an ESSID, so that it is included in the inter-car bridge group.

When two existing inter-car bridge groups are brought together, they can connect to each other. Two active groups, if they share the same ESSID, will recognize that there is traffic on the network that is not addressed to a known node, and at least one node can then issue a discovery broadcast message to all nodes sharing the ESSID, which will result in the two groups forming a single inter-car bridge group. If two inter-car bridge groups come into close proximity but do not share an ESSID, they will not recognize each other, as the network traffic of one inter-car bridge group will appear as noise to the other inter-car bridge group.

The process begins with a discovery of nodes (600), which typically involves the broadcast of a network discovery message. A first node in the new inter-car bridge group is identified (610), preferably this is a gateway node that can form a connection to Internet 160 through WAN 150. Upon identification of the node in (610), the node is added to the inter-car bridge group (620). The discovery of new nodes continues, and if more nodes are discovered (630) the process returns to (620). When no new nodes can be identified, the process terminates (640) and returns to (420).

One skilled in the art will appreciate that the discovery of new nodes, in both the initialization and the topology change methods, is preferably restricted to nodes sharing an ESSID though other implementations, including the sharing of an encryption key, or having a node name that is stored in a list of friendly nodes, can easily be implemented without departing from the scope of the present invention. To determine that no new nodes are available for addition to the network, a timeout counter can be initialized after each node is added. If no node joins before the expiry of the counter the process can terminate with the assumption that no new nodes are available. Other techniques can be utilized as will be apparent to those skilled in the art without departing from the scope of the present invention. In another embodiment, in addition to the timeout counter, a request for new node message can be transmitted after each node has joined, so that any node that is powered on after the process has commenced, but before the end of the discovery process, can be added without requiring the restart of the complete inter-car bridge group discovery process.

User device sessions and statistics are preferably maintained on each router/access point 100, so that information is not lost when inter-car WLANs regroup.

Self-forming wireless mesh networks are known. They are typically used to extend the reach of networks by having all nodes in the mesh function as part of the network infrastructure. As a result, there is no differentiation between data and infrastructure nodes in the network. The present invention allows users to join a network without requiring them to become part of the infrastructure, while at the same time uses mesh-type discovery routines to build a defined network infrastructure in Inter-car WLAN 110 to provide connectivity across inter-car bridge group 200. In a presently preferred embodiment, inter-car bridge group 200 is a series of rail cars in a train, and thus benefits from being selective in the nodes that are part of the infrastructure as the network is in motion, and may pass through other networks. By automatically discovering its an infrastructure using mesh-type discovery, a simple and dynamic discovery process is provided that allows for reconfiguration of trains without manual network reconfiguration. By selectively allowing nodes to join the infrastructure, typically by restricting membership in Inter-car WLAN 110 to nodes having a particular ESSID, nodes that are available only for a short time as the train passes through a region of connectivity are not added, and the network topology is not unnecessarily changed.

One skilled in the art will appreciate that the wireless network connectivity in Inter-car WLAN 110 and in in-car WLAN 180 can be provided using a number of known networking technologies including IEEE 802.11a/b/g, Wi-MAX™ and other standard wireless networking protocols. Preferably the networking protocols employ a radiofrequency transmission in unlicensed portion of the wireless spectrum.

In another embodiment of the present invention, at least one of the rail cars 130, 132 that provide network connectivity to passengers, employs a router/access point that communicates with Internet gateway/Router 120 using inter-car WLAN 110, but offers in-car connectivity to the passengers through a wired connection, such as 10/100 base-T Ethernet connection, a universal serial bus connection or a IEEE 1394 (Firewire™/i.Link™) connection.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method of automatically forming a wireless local area network (WLAN) within a group of rail cars in a train, each rail car in the group having an access point/router, the method comprising:
discovering nodes associated with each rail car for inclusion in the WLAN by discovering authorized access point/routers;
grouping the discovered nodes into an inter-car bridge group;
connecting all nodes in the inter-car bridge group to form the WLAN; and
connecting the WLAN to a wide area network (WAN) to share connectivity to the WAN with each of the nodes in the inter-car bridge group.

2. The method of claim 1, wherein the step of discovering nodes for inclusion comprises:
detecting a first node associated with a first car;
adding the first node to the inter-car bridge group; and
repeating the steps of detecting and adding until all authorized nodes are found.

3. The method of claim 2, wherein the step of detecting a first node includes detecting a node having a predetermined identifier.

4. The method of claim 3 wherein the identifier is an extended service set identifier.

5. The method of claim 4 wherein the step of detecting includes use of a service location protocol to detect nodes having a predetermined extended service set identifier.

6. The method of any one of claims 2 to 5 wherein the step of detecting and adding is repeated until no node is detected within a predetermined time after the detection of a previous node.

7. The method of any one of claims 1 to 6, further comprising:
monitoring the WLAN for a network topology change; and
in response to a detection of a change in the network topology, rediscovering nodes associated with each rail car for inclusion in the WLAN to dynamically reconfigure the WLAN.

8. The method of claim 7 wherein the network topology change is caused by the addition of a rail car having an authorized access point/router.

9. The method of claim 7 or 8 wherein the network topology change is caused by the removal of a rail car having an authorized access point/router.

10. The method of any one of claims 1 to 9 wherein at least one of the nodes in the inter-car bridge group is a network access point.

11. The method of claim 10, further including the step of establishing an in-car network for passenger access to the WAN through the network access point.

12. The method of claim 11 wherein the network access point is a wireless network access point and the in-car network is a wireless in-car network.
